# EUROPÄISCHE PATENTANMELDUNG

(11) **EP 2 532 539 A1**
(43) Veröffentlichungstag der Anmeldung: **12.12.2012**
(21) Anmeldenummer: 12167339.6
(22) Anmeldetag: 09.05.2012
(51) Int. Cl.: B60G 17/016, B60G 21/055, B60G 17/08

(54) **Verfahren zur Regelung der Dämpfkraft an einer Achse eines Fahrwerks für ein Kraftfahrzeug**

(30) Priorität: 06.06.2011 DE 102011076973
(71) Anmelder: ZF Friedrichshafen AG, 88038 Friedrichshafen (DE)
(72) Erfinder: Maurischat, Christian, 97502 Euerbach (DE); Ebert, Detlef, 97488 Stadtlauringen (DE)

(57) **Zusammenfassung**

Die Erfindung bezieht sich auf Verfahren zur Regelung der Dämpfkraft an einer Achse eines Fahrwerks für ein Kraftfahrzeug, mit jeweils einer regelbaren Dämpfeinrichtung zwischen jedem Radträger 2, 2' und dem Fahrzeugaufbau 1. Dabei werden die Solldämpfkräfte jeder Dämpfeinrichtung in Abhängigkeit von den jeder Dämpfeinrichtung zugeordneten Fahrbetriebssensoren erfassten Betriebsparametern ermittelt und entsprechend die Dämpfkräfte jeder Dämpfeinrichtung geregelt. Mit einem aktiven Wankstabilisierungssystem, das über einen geteilten Stabilisator 12, 12' mit den Radträgern 2, 2' oder den Dämpfeinrichtungen wirk verbunden ist und das einen Aktuator 14 aufweist, der bei Geradeausfahrt des Kraftfahrzeugs kein oder im Wesentlichen keinen Antiwankmoment aktiv generiert. Die internen Dämpfkräfte des Wankstabilisierungssystems werden bei Geradeausfahrt des Fahrzeugs ermittelt und die Dämpfkräfte der Dämpfeinrichtungen derart geregelt, dass sie in Summe mit den ermittelten internen Dämpfkräften des Wankstabilisierungssystems den ermittelten Solldämpfkräften entsprechen.

## Beschreibung

Die Erfindung bezieht sich auf ein Verfahren zur Regelung der Dämpfkraft an einer Achse eines Fahrwerks für ein Kraftfahrzeug, mit jeweils einer regelbaren Dämpfeinrichtung zwischen jedem Radträger und dem Fahrzeugaufbau, wobei die Solldämpfkräfte jeder Dämpfeinrichtung in Abhängigkeit von den jeder Dämpfeinrichtung zugeordneten Fahrbetriebssensoren erfassten Betriebsparametern ermittelt und entsprechend die Dämpfkräfte jeder Dämpfeinrichtung geregelt werden, und mit einem aktiven Wankstabilisierungssystem, das über einen geteilten Stabilisator mit den Radträgern oder den Dämpfeinrichtungen wirkverbunden ist und das einen Aktuator aufweist, der bei Geradausfahrt des Kraftfahrzeugs kein oder im wesentlichen kein Antiwankmoment aktiv generiert.

Bei einem derartigen Verfahren (DE 41 36 262 C2) ist es bekannt die Dämpfungscharakteristik der Dämpfeinrichtungen in Abhängigkeit der durch Fahrbetriebssensoren erfassten Betriebsparameter des Kraftfahrzeugs zu verändern.

Bei Kurvenfahrt wird durch das Wankstabilitätssystem dabei ein Drehmoment in den Fahrzeugaufbau eingekoppelt, das der Wankneigung des Fahrzeugs entgegengerichtet ist.

Bei Geradeausfahrt soll möglichst kein derartiges Drehmoment erzeugt werden, damit die Räder einer Achse unabhängig voneinander ein- und ausfedern können.

Dazu wird das Wankstabilitätssystem bei Geradeausfahrt inaktiv geschaltet, so dass kein Antiwankmoment aktiv generiert wird.

Aufgabe der Erfindung ist es ein Verfahren der eingangs genannten Art zu schaffen, durch das bei Geradeausfahrt eine Verfälschung der auf die Dämpfeinrichtungen einwirkenden Dämpfkräfte gegenüber den ermittelten Solldämpfkräften vermieden wird.

Diese Aufgabe wird erfindungsgemäß dadurch gelöst, dass die internen Dämpfkräfte des Wankstabilitätssystems bei Geradeausfahrt des Fahrzeugs ermittelt werden und die Dämpfkräfte der Dämpfeinrichtungen derart geregelt werden, dass sie in Summe mit den ermittelten internen Dämpfkräften des Wankstabilitätssystems den ermittelten Solldämpfkräften entsprechen.

Bewegen sich die Räder des Kraftfahrzeugs bedingt durch die Straßenanregung vertikal in unterschiedliche Richtungen, erfolgt eine Verstellung insbesondere des Aktuators des Wankstabilitätssystems, wozu interne Dämpfkräfte des Wankstabilitätssystems überwunden werden müssen.

Problematisch ist dabei, dass bei zunehmender Amplitude und Frequenz einseitig oder beidseitig gegensinnig auftretender Straßenanregungen diese internen "parasitären" Dämpfkräfte stark zunehmen.

Diese "parasitären" Dämpfkräfte wirken zusätzlich zu den Dämpfkräften der Dämpfeinrichtungen.

Da aber die parasitären Dämpfkräfte des Wankstabilitätssystems nun bei der Ermittlung der an den Dämpfeinrichtungen einzuregelnden Dämpfkräfte mit berücksichtigt werden, entsprechen die tatsächlich auf den Fahrzeugaufbau einwirkenden Dämpfkräfte den ermittelten Solldämpfkräften.

Damit wird die Einleitung von unkontrollierten Dämpfkräften in den Fahrzeugaufbau zumindest weitgehend vermieden, was zu einer Erhöhung des Fahrkomforts und einer Verbesserung der Aufbaustabilität bei Geradeausfahrt führt.

Die internen Dämpfkräfte des Wankstabilitätssystems können in Abhängigkeit von mindestens durch einen Fahrbetriebssensor erfassten Betriebsparametern ermittelt werden.

Die Fahrbetriebssensoren sind insbesondere Sensoren, die die Beschleunigung und/oder den Weg und/oder die Geschwindigkeit der Ein- und Ausfahrbewegung der Dämpfeinrichtungen oder der Relativbewegung zwischen den Radträgern und dem Fahrzeugaufbau erfassen.

Die internen Dämpfkräfte des Wankstabilitätssystems können anhand der erfassten Betriebsparameter aus einem Dämpfkräftekennfeld ermittelt werden, das in einer die Solldämpfkräfte und Dämpfkräfte berechnenden Regeleinheit abgelegt sein kann.

Weiterhin können durch die Fahrbetriebssensoren die Beschleunigung und/oder der Weg der Relativbewegungen zwischen Radträger und Fahrzeugaufbau ermittelt und als Betriebsparameter einer Regeleinheit zur Ermittlung der Solldämpfkräfte zugeleitet werden, so dass in Doppelfunktion die Fahrbetriebssensoren sowohl zur Ermittlung der internen Dämpfkräfte des Wankstabilitätssystems als auch zur Ermittlung der Solldämpfkräfte herangezogen werden können.

Das Wankstabilitätssystem kann ein elektromechanisches Wankstabilitätssystem sein, das als Aktuator einen elektromechanischen Schwenkmotor aufweist.

Durch die Relativbewegungen zwischen den Radträgern und dem Fahrzeugaufbau wirkt der elektrische Schwenkmotor als elektrischer Generator, dessen erzeugte elektrische Leistung eine Messgröße der inneren Dämpfkräfte des Wankstabilitätssystems sein kann.

Ist das Wankstabilitätssystem ein hydraulisches Wankstabilitätssystem, das als Aktuator einen hydraulischen Schwenkmotor aufweist, so ergeben sich die inneren Dämpfkräfte des Wankstabilitätssystems durch die Leitungswiderstände, die Widerstände in den Ventilen, den Staudruck in der Pumpe und den Aktuator des hydraulischen Wankstabilitätssystems.

Der Aktuator wirkt bei Geradeausfahrt wie ein hydraulischer Rotationsschwingungsdämpfer.

Ein Ausführungsbeispiel der Erfindung ist in der Zeichnung dargestellt und wird im Folgenden näher beschrieben. Es zeigen
- Fig. 1: eine Einrichtung zum Regeln der Dämpfkraft an einer Achse eines Fahrwerks eines Kraftfahrzeugs

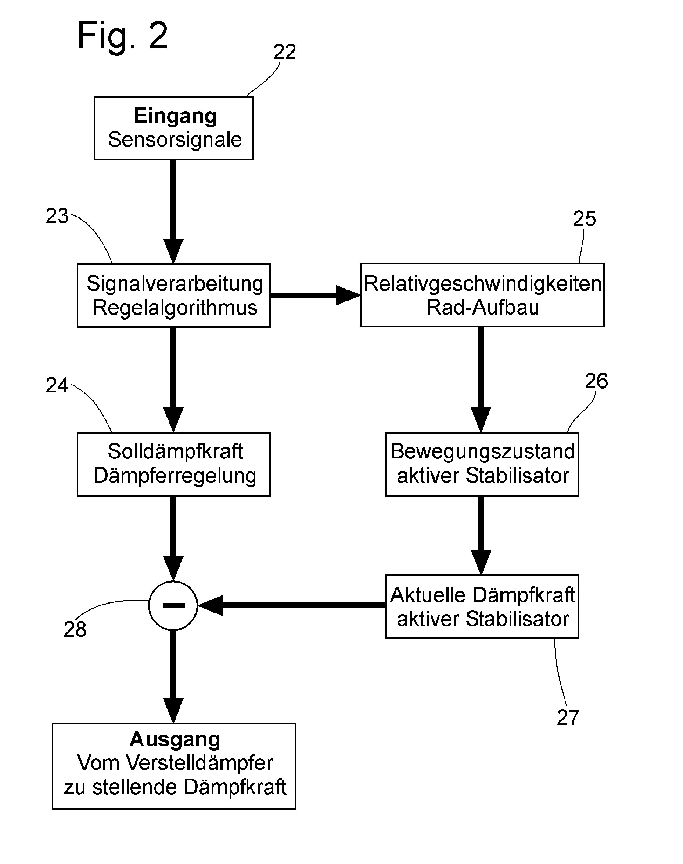

- Fig. 2: ein Flussschaltbild eines Verfahrens zu Regelung der Dämpfkraftan einer Achse eines Fahrwerks für ein Kraftfahrzeug.

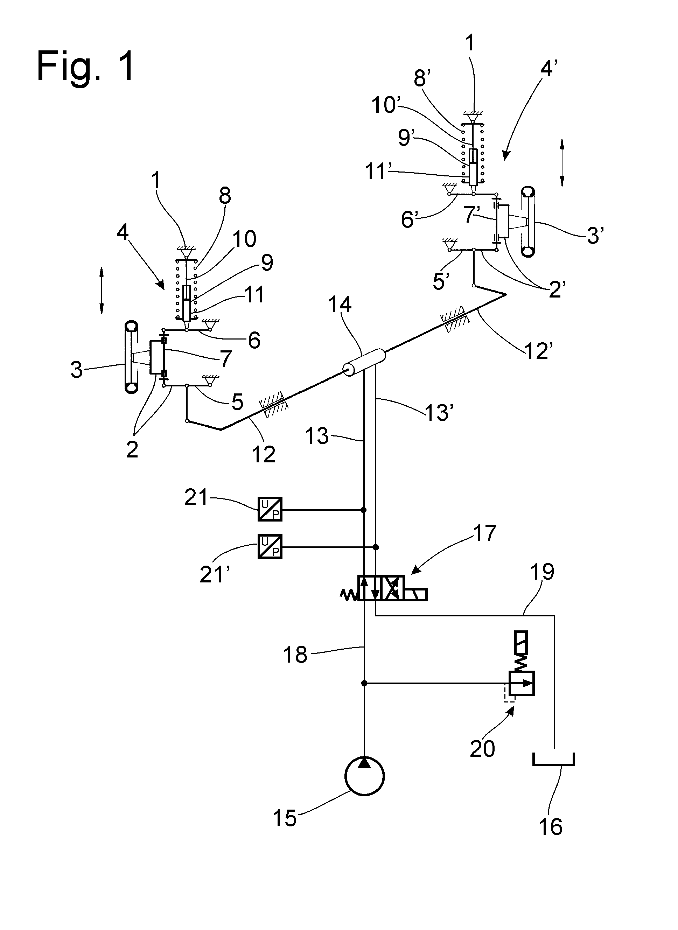

Die in Fig. 1 dargestellte Einrichtung zum Regeln der Dämpfkraft an einer Achse eines Fahrwerks eines Kraftfahrzeugs weist einen Fahrzeugaufbau 1 des Kraftfahrzeugs auf, an dem Radträger 2, 2' der Räder 3, 3' einer Achse durch je eine Radaufhängung 4, 4' vertikal beweglich aufgehängt sind.

Jede Radaufhängung 4, 4' weist einen unteren Dreieckslenker 5, 5' und einen oberen Dreieckslenker 6, 6' auf, die beide am Fahrzeugaufbau 1 um im Wesentlichen parallel zur Fahrtrichtung des Fahrwerks liegende Achsen schwenkbar gelagert sind.

Die beiden Dreieckslenker 5, 5' und 6, 6' sind durch Achsschenkelträger 7, 7' gelenkig miteinander verbunden. An dem Achsschenkträger 7, 7' ist der jeweilige Radträger 2, 2' lenkbar gelagert.

Das Gelenkparallelogramm 5, 5', 6, 6' und 7, 7' ist jeweils durch eine Schraubendruckfeder 8, 8' an dem Fahrzeugaufbau 1 elastisch abgestützt. Die Schraubendruck 8, 8' umschließt mit radialem Abstand einen Stoßdämpfer 9, 9', der einerseits mit dem oberen Dreieckslenker 5, 5' und anderseits mit dem Fahrzeugaufbau 1 gelenkig verbunden ist.

Die Schraubendruckfeder 8, 8' stützt sich einerseits an der Kolbenstange 10, 10' des Stoßdämpfers 9, 9' und andererseits an dem Zylinder 11, 11' des Stoßdämpfers 9, 9' über je einen Federteller ab.

Die beiden unteren Dreieckslenker 5, 5', und 6, 6' der beiden Radaufhängungen 4, 4' sind durch eine Stabilisatoreinrichtung miteinander verbunden, die einen geteilten Stabilisator 12, 12' und einen als hydraulischer Schwenkmotor ausgebildeten Aktuator 14 aufweist.

Zu jeder der beiden Kammern des Aktuators 14 führt eine Leitung 13, 13'.

Über ein entgegen einer Federkraft elektrisch betätigbares 4/2-Wegeventil 17 ist entweder die eine Kammer des Aktuators 14 mit dem Druckauslass einer Pumpe 15 und die andere Kammer mit einem drucklosen Behälter 16 oder umgekehrt verbindbar.

Zwischen der von der Pumpe 15 zur 4/2-Wegeventil 17 führenden Druckleitung 18 und der von dem 4/2-Wegeventil 17 zum Behälter 16 führenden Rücklaufleitung 19 ist ein Druckregler 20 angeordnet.

Weiterhin wird der Druck in jeder Leitung 13, 13' durch einen Drucksensor 21, 21' erfasst.

Bei Geradeausfahrt wird der Aktuator 14 nicht mit einer unter Druck stehenden Hydraulikflüssigkeit beaufschlagt, so dass auch kein oder im Wesentlichen kein Aktivwankmoment am Aktuator 14 generiert wird.

Bewegen sich die Räder 3, 3' des Kraftfahrzeugs bedingt durch die Straßenanregung vertikal in unterschiedliche Richtungen, erfolgt trotz Geradeausfahrt eine Verstellung des Aktuators 14, wobei interne Dämpfkräfte überwunden werden müssen.

Die Stoßdämpfer 9, 9' sind in ihren Dämpfkräften regelbar.

Dazu werden in einem ersten Schritt 22 durch nicht dargestellte Fahrbetriebsensoren die Beschleunigung und der Weg der Relativbewegungen zwischen den Radträgern 2, 2' und dem Fahrzeugaufbau 1 ermittelt, in einem zweiten Schritt 23 entsprechende Betriebsparameter bestimmt und einer nicht dargestellten Reglereinheit zur Ermittlung der Solldämpfkräfte der Stoßdämpfer 9, 9' in einem dritten Schritt 24 zugeleitet.

Aus den Betriebsparametern werden weiterhin in einem vierten Schritt 25 die Relativgeschwindigkeiten Rad-Aufbau ermittelt.

Da die Enden des geteilten Stabilisators 12, 12' mit den unteren Dreieckslenkern 5, 5' verbunden sind, lässt sich in einem fünften Schritt 26 der aktuelle Bewegungszustand des geteilten Stabilisators 12, 12' bei Kenntnis dieser Relativgeschwindigkeiten genau bestimmen.

In einem sechsten Schritt 27 werden aus dem Bewegungszustand der geteilten Stabilisatoren 12, 12' die internen Dämpfkräfte der Stabilisatoren 12, 12' ermittelt.

Durch Subtraktion der ermittelten inneren Dämpfkräfte der Stabilisatoren 12, 12' von den ermittelten internen Solldämpfkräften in einem siebten Schritt 28 werden die Dämpfkräfte ermittelt, zu denen die Stoßdämpfer 9, 9' eingeregelt werden.

Diese Dämpfkräfte entsprechen dann in Summe mit den internen Dämpfkräften den Solldämpfkräften.

### Bezugszeichen

- 1: Fahrzeugaufbau
- 2: Radträger
- 2': Radträger
- 3: Rad
- 3': Rad
- 4: Radaufhängung
- 4': Radaufhängung
- 5: unterer Dreieckslenker
- 5': unterer Dreieckslenker
- 6: oberer Dreieckslenker
- 6': oberer Dreieckslenker
- 7: Achsschenkelträger
- 7': Achsschenkelträger
- 8: Schraubendruckfeder
- 8': Schraubendruckfeder
- 9: Stoßdämpfer
- 9': Stoßdämpfer
- 10: Kolbenstange
- 10': Kolbenstange
- 11: Zylinder
- 11': Zylinder
- 12: Stabilisator
- 12': Stabilisator
- 13: Leitung
- 13': Leitung
- 14: Aktuator
- 15: Pumpe
- 16: Behälter
- 17: 4/2-Wegeventil
- 18: Druckleitung
- 19: Rücklaufleitung
- 20: Druckregler
- 21: Drucksensor
- 21': Drucksensor
- 22: erster Schritt
- 23: zweiter Schritt
- 24: dritter Schritt
- 25: vierter Schritt
- 26: fünfter Schritt
- 27: sechster Schritt
- 28: siebter Schritt

## Patentansprüche

1. Verfahren zur Regelung der Dämpfkraft an einer Achse eines Fahrwerks für ein Kraftfahrzeug, mit jeweils einer regelbaren Dämpfeinrichtung zwischen jedem Radträger und dem Fahrzeugaufbau, wobei die Solldämpfkräfte jeder Dämpfeinrichtung in Abhängigkeit von den jeder Dämpfeinrichtung zugeordneten Fahrbetriebssensoren erfassten Betriebsparametern ermittelt und entsprechend die Dämpfkräfte jeder Dämpfeinrichtung geregelt werden, und mit einem aktiven Wankstabilisierungssystem, das über einen geteilten Stabilisator mit den Radträgern oder den Dämpfeinrichtungen wirkverbunden ist und das einen Aktuator aufweist, der bei Geradeausfahrt des Kraftfahrzeugs kein oder im wesentlichen kein Antiwankmoment aktiv generiert, **dadurch gekennzeichnet, dass** die internen Dämpfkräfte des Wankstabilitätssystems bei Geradeausfahrt des Fahrzeugs ermittelt werden und die Dämpfkräfte der Dämpfeinrichtungen derart geregelt werden, dass sie in Summe mit den ermittelten internen Dämpfkräften des Wankstabilitätssystems den ermittelten Solldämpfkräften entsprechen.

2. Verfahren nach einem der vorhergehenden Ansprüche, **dadurch gekennzeichnet, daß** die internen Dämpfkräfte des Wankstabilitätssystems in Abhängigkeit von mindestens durch einen Fahrbetriebssensor erfassten Betriebsparametern ermittelt werden.

3. Verfahren nach einem der vorhergehenden Ansprüche, **dadurch gekennzeichnet, dass** durch die Fahrsensoren die Beschleunigung und/oder der Weg und/oder die Geschwindigkeit der Ein- und Ausfahrbewegung der Dämpfeinrichtungen oder der Relativbewegung zwischen den Radträgern (2, 2') und dem Fahrzeugaufbau (1) erfasst werden.

4. Verfahren nach einem der vorhergehenden Ansprüche, **dadurch gekennzeichnet, dass** die internen Dämpfkräfte des Wankstabilitätssystems anhand der erfassten Betriebsparameter aus einem Dämpfkräftekennfeld ermittelt werden.

5. Verfahren nach einem der vorhergehenden Ansprüche, **dadurch gekennzeichnet, daß** durch die Fahrbetriebssensoren die Beschleunigung und/oder der Weg der Relativbewegungen zwischen Radträger (2, 2') und Fahrzeugaufbau (1) ermittelt und als Betriebsparameter einer Regeleinheit zur Ermittlung der Solldämpfkräfte zugeleitet werden.

6. Verfahren nach einem der vorhergehenden Ansprüche, **dadurch gekennzeichnet, dass** das Wankstabilitätssystem als Aktuator einen elektromechanischen Schwenkmotor aufweist.

7. Verfahren nach einem der Ansprüche 1 bis 5, **dadurch gekennzeichnet, dass** das Wankstabilitätssystem als Aktuator (14) einen hydraulischen Schwenkmotor aufweist.
